Europäisches Patentamt

European Patent Office

Office européen des brevets

(19)

(11) **EP 0 581 989 B1**

(12) **EUROPÄISCHE PATENTSCHRIFT**

(45) Veröffentlichungstag und Bekanntmachung des Hinweises auf die Patenterteilung:
**13.11.1996  Patentblatt 1996/46**

(51) Int Cl.⁶: **H02M 3/335**

(21) Anmeldenummer: 92113375.7

(22) Anmeldetag: **05.08.1992**

(54) **Schaltregler mit Regelung wenigstens einer Ausgangsspannung**

Switching regulator with regulation of at least an output voltage

Régulateur à découpage avec régulation d'au moins une tension de sortie

(84) Benannte Vertragsstaaten:
**AT BE CH DE DK ES FR GB GR IT LI NL PT SE**

(43) Veröffentlichungstag der Anmeldung:
**09.02.1994  Patentblatt 1994/06**

(73) Patentinhaber: **SIEMENS AKTIENGESELLSCHAFT**
**80333 München (DE)**

(72) Erfinder: **Kramer, Karl-Heinz**
**W-8192 Geretsried 1 (DE)**

(56) Entgegenhaltungen:
**EP-A- 0 302 433        EP-A- 0 415 244**
**US-A- 4 672 518**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf einen wie im Oberbegriff des Patentanspruchs 1 angegebenen Schaltregler mit Regelung wenigstens einer Ausgangsspannung.

Ein derartiger Schaltregler ist bereits aus der WO 91/16756 bekannt. Bei dem bekannten Schaltregler ist eine Vorrichtung zur Spitzenwert-Strombegrenzung vorgesehen, bei der ein Komparator mit seinem einen Eingang an eine Referenzspannung und mit seinem anderen Eingang an einen Strommeßwiderstand angeschlossen ist. In Serie zum Strommeßwiderstand ist eine Dreieckspannungsquelle angeordnet.

Die Dreieckspannungsquelle liefert ein externes synchrones Dreiecksignal, das der Strommeßspannung überlagert wird. Eine derartige Überlagerung eines externen synchronen Dreiecksignals, die aus der DE-OS 26 13 896 an sich bekannt ist, ist bei der Auswertung der Strommeßspannung mit Hilfe des Komparators vorteilhaft. Damit wird zum einen ein definiertes Schaltkriterium gewonnen, zum anderen wird die Stabilität im subharmonischen Bereich erhöht.

Bei einer Variante des bekannten Umrichters dient der Meßwiderstand zugleich als Istwertgeber eines Stromreglers mit überlagerter Spannungsregelung, bei der der Istwert der Spannung der Sollwert der Stromregelung ist.

Bei einer solchen Current-Mode-Regelung dient als Abschaltkriterium für die Tastgrad-Steuerung ein Stromsignal nötig, das der Regelschaltung als Spannungsabfall an einen Strommeßwiderstand oder als Bürdenspannung eines Stromwandlers zur Verfügung gestellt wird.

Aus der EP 0 415 244 ist bekannt, daß bei einem nach dem Current-Mode-Prinzip geregelten DC/DC-Konverter, dem Strommeßsignal eine zusätzliche, rampenförmige Spannung überlagert wird.

Aus der EP 0 302 433 Al ist ferner bereits bekannt, Durchflußumrichter oder Sperrumrichter mit stromabhängigen Magnetbauteilen, z.B. sogenannten nichtlinearen Drosseln zu versehen, deren Induktivität mit abnehmender Gleichstrombelastung abnimmt.

Beim Sperrumrichter bewirkt ein Speicherübertrager mit stromabhängigem Ferritkern bei Schwachlast eine deutlich verlängerte Stromflußzeit im Sekundärkreis. Dies verbessert verschiedene Eigenschaften des Umrichters, insbesondere die Kleinheit der überlagerten Wechselspannung und die Funkentstörung deutlich.

Beim Durchflußumrichter ist ein Einsatz von stromabhängigen Speicherdrosseln im mittelwertbildendem Tiefpaß zweckmäßig, wenn z.B. bei großem Lastbereich und mehreren Ausgangskreisen ein lückender Betrieb vermieden werden soll. Ein solches stromabhängiges Magnetbauteil erlaubt zudem sehr kleine Vorlasten, so daß die internen Verluste im Stromversorgungsgerät klein gehalten werden können.

Wird ein Umrichter am Ausgang nur gering belastet, so fällt am Strommeßwiderstand eine vergleichsweise kleine Spannung an. Wählt man den Betrag der als Abschaltkriterium dienenden Strommeßspannung so groß, daß bei Schwachlastbetrieb ein ausreichend exaktes Abschalten gewährleistet ist, so bedeutet dies bei maximaler Nennlast eine entsprechend hohe Verlustleistung am Strommeßwiderstand.

Will man die Vorteile eines Magnetbauteiles mit stromabhängiger Induktivität in Verbindung mit der vorteilhaften Spannungsregelung mit unterlagerter Stromregelung (Current-Mode-Regelung) nutzen, so tritt das Problem auf, daß bei kleiner Belastung die Strommeßspannung und der zeitliche Anstieg der Strommeßspannung noch kleiner ist als bei Verwendung einer stromunabhängigen Induktivität.

Aufgabe der Erfindung ist es, den Schaltregler und seine Dreieckspannungsquelle in möglichst wenig aufwendiger Weise zu realisieren. Insbesondere soll es die Dreieckspannung ermöglichen, bei einem Durchfluß- und/oder Sperrwandler mit Spannungsregelung durch unterlagerte Stromregelung (Current-Mode-Regelung) in Verbindung mit einem magnetischen Bauteil mit stromabhängiger Induktivität in einem vergleichsweise großen Lastbereich einen stabilen Schaltbetrieb zu gewährleisten.

Gemäß der Erfindung wird der Schaltregler zur Lösung dieser Aufgabe in der im kennzeichnenden Teil des Patentanspruchs 1 angegebenen Weise ausgebildet.

Durch die erfindungsgemäßen Maßnahmen ergibt sich der Vorteil, daß sich der Schaltregler in einfach realisierbarer Weise durch die Rampenspannungsquelle ergänzen läßt.

Vorteilhafte Ausgestaltungen der Erfindung ergeben sich aus den Unteransprüchen.

Bei der Weiterbildung nach Anspruch 2 bestimmt der in der Emitterzuleitung des Hilfstransistors angeordnete zusätzliche Widerstand den Strom, mit dem der Strommeßwiderstand zusätzlich beaufschlagt wird. Der zusätzliche Widerstand gestattet es, die Spannung, mit der die Basis des Hilfstransistors beaufschlagt wird, so groß zu wählen, daß Parameteränderungen des Hilfstransistors praktisch ohne Einfluß bleiben.

Die nach Anspruch 3 vorgesehene RC-Anordnung dient in vorteilhafter Weise als Siebglied für die dem Komparator zugeführte Strommeßspannung.

Nach Anspruch 4 sind für den am Eingang des Hilfstransistors liegenden Kondensator mehrere Ladestromzweige vorgesehen. Dabei läßt sich in vorteilhafter Weise erreichen, daß die absolute Größe des Abschaltkriteriums unabhängig von der Eingangsspannung ist. Die mit Hilfe der Dreieckspannungsquelle gewonnene Dreieckspannung kann sich in Verbindung mit einer Vorrichtung zur Momentanwertstrombegrenzung als zweckmäßig erweisen.

Die Maßnahmen nach Anspruch 8 ergeben einen Schaltregler mit Regelung der Ausgangsspannung durch unterlagerte Stromregelung, bei dem mit geringem Aufwand ein stabiler Schaltbetrieb gewährleistet ist.

Bei der Weiterbildung nach Anspruch 9 wird mit einfach realisierbaren Maßnahmen ein stabiler Schaltbetrieb bei einem Umrichter mit Spannungsregelung durch unterlagerte Stromregelung in Verbindung mit einem magnetischen Bauteil mit stromabhängiger Induktivität gewährleistet.

Die Erfindung wird anhand des in der Fig. 1 dargestellten Ausführungsbeispieles sowie der in den Figuren 2 bis 4 dargestellten Zeitdiagramme näher erläutert.

Fig. 1 zeigt einen Schaltregler mit Regelung wenigstens einer Ausgangsspannung. Die Figuren 2 und 3 zeigen Zeitdiagramme für den Schaltregler nach Fig. 1 mit stromabhängiger Induktivität, aber ohne Dreieckspannungsquelle, und zwar

Fig. 2 den zeitlichen Verlauf der Strommeßspannung bei maximaler Last und

Fig. 3 den zeitlichen Verlauf der Strommeßspannung bei minimaler Last.

Fig. 4 zeigt ein Zeitdiagramm für den Schaltregler nach Fig. 1 mit stromabhängier Induktivität.

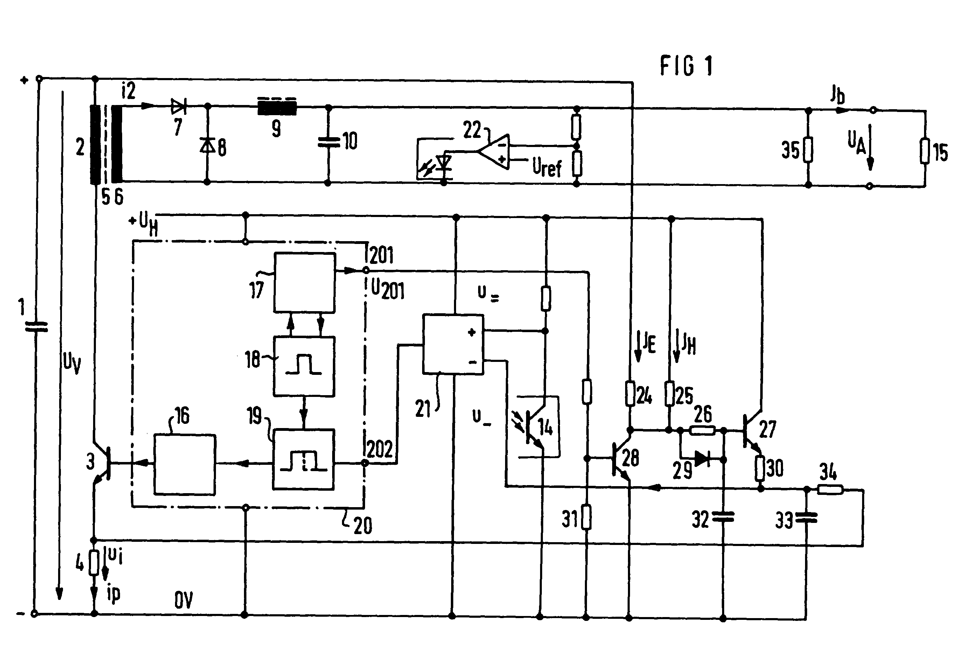

Der in Fig. 1 gezeigte Schaltregler liegt mit seinem Eingang an der Eingangsgleichspannungsquelle 1 und versorgt den Lastwiderstand 15 mit der geregelten Ausgangsspannung $U_A$. Der primärseitige Hauptstromkreis des Schaltreglers führt vom Pluspol der Eingangsspannungsquelle 1 über die Primärwicklung 2 des Transformators 5 zum Kollektor des Transistors 3 und vom Emitter des Transistors 3 über den Strommeßwiderstand 4 zum Minuspol der Eingangsgleichspannungsquelle 1.

Zwischen der Sekundärwicklung 6 des Transformators 5 und dem Kondensator 10 liegt die Gleichrichterdiode 7. In einem auf die Gleichrichterdiode 7 folgenden Querzweig ist die Freilaufdiode 8 angeordnet. Im Längszweig zwischen Freilaufdiode 8 und Kondensator 10 liegt die Drossel 9. Am Kondensator 10 liegt die Ausgangsspannung $U_A$ des Schaltreglers. Parallel zum Kondensator 10 liegt der Widerstand 35, der eine Vorlast bildet. Der ebenfalls parallel zum Kondensator 10 liegende Lastwiderstand 15 wird mit der Ausgangsspannung $U_A$ gespeist.

Parallel zum Kondensator 10 liegt der Spannungsteiler 13, der den Istwert für den invertierenden Eingang des Regelverstärkers 22 liefert. Die Optokoppler-Diode 12 überträgt das Stellsignal des Spannungsreglers 22 auf den Optokoppler-Transistor 14. Der nichtinvertierende Eingang des Spannungsreglers 22 ist mit der Referenzspannung $U_{Ref}$ beaufschlagt.

Der Transistor 3 dient als Leistungsschalter. Der Minuspol der Eingangsspannungsquelle 1 bildet den Anschluß für das Bezugspotential 0 Volt.

Die Steuerschaltung 20, die zur Regelung der Ausgangsspannung $U_A$ dient, enthält den Impulsgenerator 18 und den daran angeschlossenen Impulsdauermodulator 19. Die Steuerschaltung 20 enthält ferner die Synchronisierimpulsquelle 17, die mit dem Impulsgenerator 18 verbunden ist und Synchronisierimpulse an den Ausgang 201 der Steuerschaltung 20 abgibt.

Der Impulsdauermodulator 19 gibt über den in der Steuerschaltung 20 enthaltenen Treiber 16 eine Folge von Einschaltimpulsen an die Basis des Transistors 3 ab. Diese Einschaltimpulse steuern den Transistor 3 jeweils leitend.

Der Fototransistor 14 des Optokopplers liegt auf der einen Seite am Bezugspotential 0 Volt und auf der anderen Seite am nichtinvertierenden Eingang des Komparators 21. Der Komparator 21 ist mit seinem invertierenden Eingang über den Widerstand 34 an den Strommeßwiderstand 4 angeschlossen. Der Ausgang des Komparators 21 ist mit dem Eingang 202 der Steuerschaltung 20 verbunden. Der Eingang 202 der Steuerschaltung 20 führt zum Steuereingang des Impulsdauermodulators 19.

Der Komparator 21 vergleicht den Momentanwert der am Strommeßwiderstand 4 abfallenden Spannung mit der Ausgangsspannung des Spannungsvergleichers 22. Hieraus resultiert eine Spannungsregelung mit unterlagerter Stromregelung, bei der der Istwert der Ausgangsspannung U2 der Sollwert der Stromregelung ist und die auch als Current-Mode-Regelung bezeichnet wird.

Der Hilfstransistor 27 prägt einen zusätzlichen Strom in den Strommeßwiderstand 4 ein. Dieser Strom hat einen rampenförmigen Verlauf. Dies wird dadurch erreicht, daß der Hilfstransistor 27 in Emitterschaltung geschaltet ist, daß der Strommeßwiderstand 4 in der Emitterzuleitung des Hilfstransistors 27 angeordnet ist, und daß die Basis des Hilfstransistors 27 an eine Spannungsquelle angeschlossen ist, die eine sägezahnförmige Spannung liefert.

Die sägezahnförmige Spannung entsteht am Kondensator 32, dessen einer Anschluß am Bezugspotential 0 Volt und dessen gegenüber dem Bezugspotential 0 Volt spannungführender Anschluß mit der Basis des Hilfstransistors 27 verbunden ist. Der Kollektor des Transistors 27 liegt an der Hilfsspannung $+U_H$.

Bei gesperrtem Tansistor 28 wird der Kondensator 32 mit Hilfe der Ströme $I_F$ und $I_H$ geladen, die über die Widerstände 24 und 25 zur Anode der Diode 29 und von dort über die Diode 29 zum Kondensator 32 fließen.

Der Kondensator 32 wird mit Hilfe des Transistors 28 periodisch entladen. Der Entladestromzweig verläuft von der Basis des Transistors 27 über den Widerstand 26 und der Emitter-Kollektorstrecke des Transistors 28 zum Minuspol der Eingangsspannungsquelle 1, mit dem der Emitter des Transistors 28 und der eine Anschluß des Kondensators 32 verbunden sind.

Die Basis des Transistors 28 liegt am Abgriff eines Spannungsteilers, der an den Ausgang 201 der Steuerschaltung 20 angeschlossen ist und aus den Widerständen 23 und 31 besteht.

Der Transistor 28 ist durch die Steuerschaltung 20 derart steuerbar, daß er während der Dauer der den Transistor 3 leitend steuernden Einschaltimpulse gesperrt und wenigstens während eines vorgegebenen Teiles der Einschaltimpulspausen leitend gesteuert ist. Vorzugsweise ist der Transistur 28 jeweils während der Halbperiode der Taktimpulsfolge gesperrt, während der der Transistor 3 zur Begrenzung des Tastverhältnisses auf jeden Fall ebenfalls gesperrt ist.

Der Widerstand 26 liegt zwischen dem Kollektor des Transistors 28 und der Basis des Hilfstransistors 27. Parallel zum Widerstand 26 liegt die Diode 29. Die Diode 29 ist so gepolt, daß sie bei leitend gesteuertem Transistor 28 gesperrt und bei gesperrtem Transistor 28 leitend ist. Bei der Parallelschaltung aus Diode 29 und Widerstand 26 fließt daher der Ladestrom des Kondensators 32 über die Diode 29 und der Entladestrom des Kondensators 32 über den Widerstand 26.

Die Parallelschaltung aus Diode 29 und Widerstand 26 kann durch eine Verbindung ersetzt sein, falls der Transistor 28 den Kondensator 32 allein entladen kann.

Der mit dem Kollektor des Transistors 28 verbundene Anschluß der Diode 29 ist über den Widerstand 24 an den Pluspol der Eingangsspannungsquelle 1 und über den Widerstand 25 an die Hilfsspannung $U_H$ geführt. Der über die Diode 29 fließende Ladestrom des Kondensators 32 setzt sich daher aus den Strömen IE und IH zusammen, von denen der Strom IE über den Widerstand 24 und der Strom IH über den Widerstand 25 fließt.

Der Anschluß des Strommeßwiderstandes 4, der über die Widerstände 34 und 30 mit dem Emitter des Transistors 3 verbunden ist, führt gegenüber dem an Bezugspotential liegenden Minuspol der Eingangsspannungsquelle 1 Spannung. Zwischen dem spannungführenden Anschluß des Strommeßwiderstandes 4 und dem Emitter des Hilfstransistors 27 ist die aus den Widerständen 30 und 34 bestehende Serienschaltung angeordnet. Dabei ist der Widerstand 30 mit dem Emitter des Transistors 27 und der Widerstand 34 mit dem Strommeßwiderstand 4 verbunden. Der Wert des Widerstandes 30 ist viel größer als der Wert des Strommeßwiderstandes 4.

Der Verbindungspunkt der Widerstände 30 und 34 ist über den Kondensator 33 an das Bezugspotential geführt. Hieraus ergibt sich, daß zwischen dem Strommeßwiderstand 4 und dem Widerstand 30 eine RC-Anordnung mit einem in einem Längszweig liegenden Widerstand 34 und einem in einem Querzweig liegenden Kondensator 33 angeordnet ist.

Der zur Regelschaltung gehörende Spannungskomparator 21 bildet einen A/D Wandler. Der Spannungskomparator 21 vergleicht die Spannung $u_i(t)$ mit dem vom Regler abgegebenen Stellsignal $u_=$ und gibt in jeder Taktperiode T ein Abschaltsignal "aus" für den als Stellglied dienenden Transistor 3 ab, sobald die steigende Rampe $u_i(t)$ das Stellsignal $u_=$ überschneidet. Die Rampe der Strommeßspannung $u_i$ ist im wesentlichen durch die stromabhängige Induktivität der Speicherdrossel 9 bestimmt.

Für eine sichere Betriebsweise ist es notwendig, daß diese Überschneidung mit einer bestimmten Mindeststeigung $du_i/dt$ erfolgt, damit die Totzeit des Komparators 21 nicht zu groß wird.

Das Abschaltkriterium muß außerdem eine gewisse Mindestgröße haben, um dem Eingang des Komparators 21 den nötigen Signal-/Störabstand zu bieten.

Ohne die Rampenspannungsquelle mit dem Hilfstransistor 27 würden bei Leerlauf und kleiner Eingangsspannung Uv sowohl die Amplitude der Stromrampe als auch ihre Steigung zu klein für einen sicheren Schaltbetrieb des Komparatoars 21, da hierbei die Induktivität der stromabhängigen Drossel z.B. um etwa den Faktor 20 ansteigt. Andererseits wird der Induktionshub bei kleiner Eingangsspannung Uv kleiner. Beides zusammen bewirkt, daß dem Komparator 21 ein etwa 40 mal kleineres Abschaltkriterium zur Verfügung stünde als im Nennbetrieb.

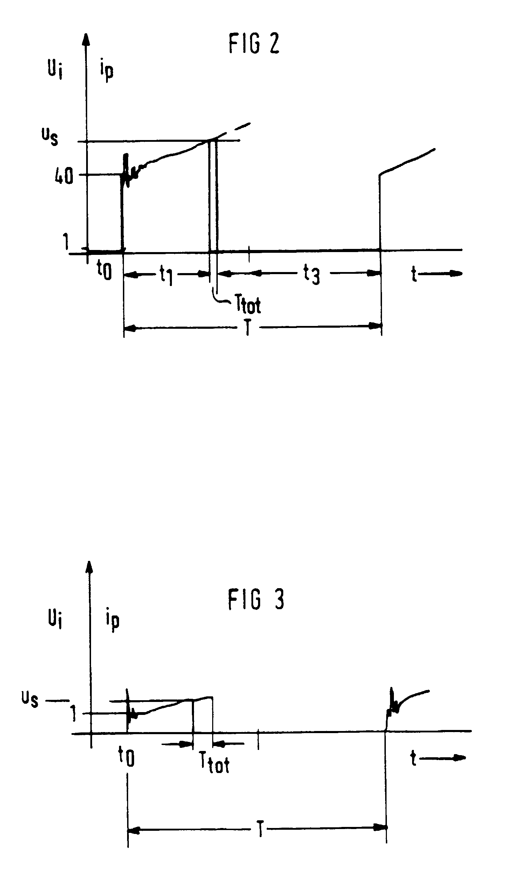

Die Figuren 2 und 3 zeigen für den Gleichstromumrichter nach Fig. 1 den zeitlichen Verlauf des Eingangsstromes ip und der am Strommeßwiderstand 4 abfallenden Spannung für den Fall, daß die Drossel 9 eine stromabhängige Induktivität besitzt und die Dreieckspannungsquelle nicht vorhanden ist.

Nach Fig. 2 hat der Strom ip(t) bei maximaler Ausgangsleistung P beim Einschalten d.h. zum Zeitpunkt to einen bestimmten Anfangswert, der am Strommeßwiderstand 4 den entsprechenden Spannungsabfall $u_i(t)$ verursacht. Während der Zeitspanne t1 steigt der Strom ip an, bis die vom Strom ip bzw. der Spannung $u_i$ abgeleitete Spannung $u_=$ am invertierenden Eingang des Komparators 21 den Vergleichswert $U_=$ am nichtinvertierenden Eingang übersteigt. Nach Ablauf einer gewissen Totzeit $T_{tot}$ gibt der Komparator 21 ein "aus"-Signal ab, das die Sperrung des Transistors 3 veranlaßt.

Die Rampe, mit der der Strom ip ansteigt, stammt von den Magnetisierungskomponenten bzw. Magnetisierungsströmen des Transformators 5 und der Speicherdrossel 9. Fig. 2 zeigt, daß Größe und zeitlicher Verlauf des Abschaltkriteriums ein problemloses Schaltsignal für den Komparator 21 angeben.

Fig. 3 zeigt die Verhältnisse bei Leerlauf mit größerem Maßstab für den Strom ip und die Spannung $u_i$ als bei Fig. 2.

Bei Leerlauf, d.h. bei an den Lastwiderstand 15 abgegebenem Strom Ib = 0 ist der Anfangswert des Primärstromes ip sehr klein.

Die stromabhängige Drossel 9 nimmt im Leerlauf eine um den Faktor 20 größere Induktivität an. Der Anteil des Magnetisierungsstromes der Drossel 9 ist daher in diesem Betriebsfall ebenfalls klein. Daher bleibt auch der Scheitelwert nach Ablauf der Zeitspanne t1 klein. Das bewirkt ohne Dreieckspannung einen unsicheren Schnittpunkt der Spannung $u_=$ mit dem Vergleichswert $u_=$ am Eingang des Komparators 21 und zusätzlich eine relativ lange Totzeit für das "aus"-Signal. Beides zusammen ergibt einen unstabilen Schaltbetrieb.

Bei dem Schaltregler nach Fig. 1 ist dagegen eine Dreieckspannungsquelle vorgesehen. Der Hilfstransistor 27 ist in einer Hilfsschaltung enthalten, mit deren Hilfe eine rampenförmige Hilfsspannung erzeugt wird. Diese Hilfsspannung erhöht den Signal/Störabstand am invertierenden Eingang des Komparators 21 und vergrößert die Steigung $du_/dt$ und damit die Totzeit des Komparators 21. Die Hilfsspannung bildet eine Zusatzrampe und sorgt für ein brauchbares Schaltkriterium auch in den Betriebsbreichen, in denen die am Meßwiderstand 4 aus dem Strom ip gewonnene Rampe klein wird.

Der Transistor 27 ist in Emitterschaltung geschaltet und prägt in die Serienschaltung der Widerstände 30, 34 und 4 den definierten, rampenförmigen Strom i3(t) ein. Der Strom i3 verursacht einen Spannungsabfall, der eine Zusatzrampe bildet und sich der Spannung $u_i(t)$ überlagert. Unter der Voraussetzung

$$R30 >> (R34 + R4)$$

ist der Strom i3(t) in erster Näherung gegeben durch

$$i3(t) = u3(t)/R30,$$

wobei R30 der Wert des Widerstandes 30, R34 der Wert des Widerstandes 34 und R4 der Wert des Widerstandes 4 ist.

Bei einem bevorzugten Bemessungsbeispiel sind

$$R4 = 50 \text{ m}\Omega, R34 = 100\Omega, R30 = 2{,}7 \text{ k}\Omega.$$

Die Spannung u201 wird vom Synchron-Signal der Steuerschaltung 20 abgenommen, die vorzugsweise ein integrierter Schaltkreis ist. Am Synchronausgang 201 steht ein Synchronisiersignal zur Verfügung, dessen Spannungswert abwechselnd H (high = hoch) und L (low = niedrig) ist. Der Spannungswert H liegt während der Halbperiode an, während der der Transistor 3 jeweils leitend gesteuert sein kann. In der darauffolgenden Halbperiode hat die Spannung jeweils den Wert L.

Die rampenförmige Spannung u3(t) wird gebildet durch die Einströmung des Summenstromes Is in den Strommeßwiderstand 4. Solange die Spannung $U_{201}$ am Synchronisierausgang 201 der Steuerschaltung $U_{201}$ = L ist, ist der Transistor 28 gesperrt. Bei gesperrtem Transisstor 28 integriert der Kondensator 32 den Strom Is zu der Spannungsrampe u3. Dabei ist

$$u3(t) = Is*t1*1/C3,$$

wobei t1 = T/2
und C3 die Kapazität des Kondensators 32 und das Zeichen * das Symbol für die Multiplikation ist.

Während der Zeitspanne t2 = T-t1 ist u201 = H. Damit ist der Transistor 28 leitend, wodurch der Kondensator 32 wieder entladen wird. In der nächsten Taktperiode ist wieder u201 = L und der Vorgang wiederholt sich von neuem.

Der die zusätzliche Rampe bestimmende Strom Is ist die Summe der Ströme IE und IH.

Der Strom IH wird von einer konstanten Hilfsspannung UH abgeleitet. Der Strom IE ist proportional der Eingangsspannung Uv. Damit wird erreicht, daß bei größerer Eingangsspannung Uv eine Rampe mit größerer Steilheit überlagert wird, so daß trotz der hierbei gegebenen kürzeren Einschaltdauer t1 des Transistors der gleich hohe Absolutwert der Spannung u_ erreicht wird. Die absolute Höhe des Abschaltkriteriums u_ ist dadurch unabhängig von der Eingangsspannung Uv. Dies ist für eine sichere Funktion des als A/D-Wandler dienenden Komparators 21 von besonderem Vorteil.

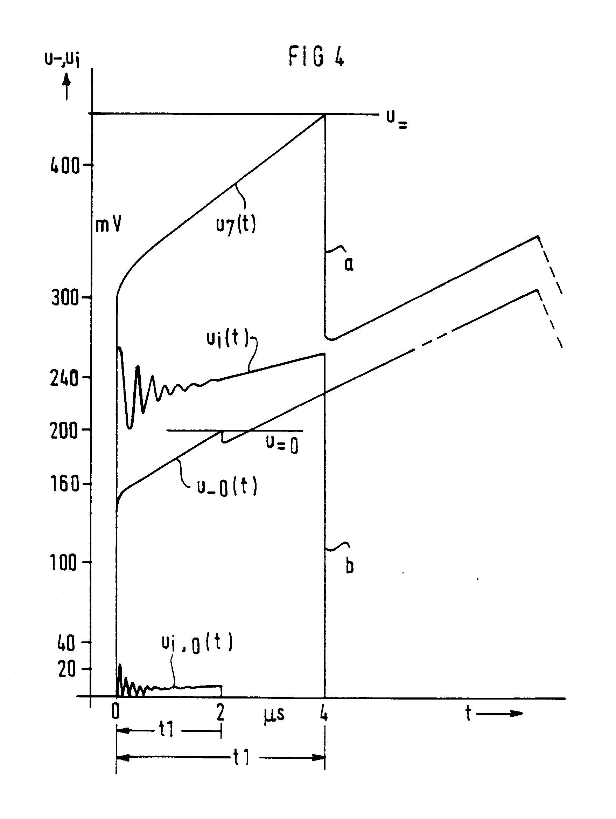

Die Diagramme a und b in Fig. 4 verdeutlichen die Wirkung der Zusatzrampe.

Nach Diagramm a hat bei maximaler Leistung P der Scheitelwert der Spannung $u_i$ eine Größe von 260 mV. Die überlagerte Zusatz-Rampe bewirkt, daß die Spannung u_ einen Scheitelwert von 440 mV erreicht, wodurch ein einwandfreier Schnitt mit dem Vergleichswert u_ gewährleistet ist.

Bei Leerlauf P = 0 hat der Scheitelwert der Spannung $u_i$ nur eine Größe von 8 mV und die überlagerten Störungen darauf sind relativ groß. Ein eindeutiger Schnitt mit u_ ist damit nicht zu erreichen.

Die überlagerte Zusatz-Rampe hebt hier den von der Spannung $u_i$ abgeleiteten Scheitelwert der Spannung u_ auf einen Wert von 200 mV an und versteilert auch den Rampenanstieg. Damit wird auch in diesem Betriebsfall ein eindeutiger Schnitt mit dem Vergleichswert $u_{=o}$ und damit ein sicheres, regelmäßiges Schaltverhalten erreicht.

Nachdem zum Zeitpunkt t1 der Transistor 4 durch das "aus"-Signal abgeschaltet worden ist, wird ip = 0 und damit auch $u_i$ = 0. Die Zusatzrampe steigt noch weiter an, bis die Spannung u201 auf H geht und der Kondensator 32 entladen wird. Dies hat jedoch auf die Schaltungsfunktion keinen Einfluß.

## Patentansprüche

1. Schaltregler mit einem in einem primärseitigen Hauptstromkreis in Serie zu einem Strommeßwiderstand (4) angeordneten Leistungsschalter (Transistor 3), mit einer im Ausgangskreis ausgeordneten Stromabhängigen Induktivität (9) und mit einer Steuerschaltung (20), die einen Impulsgenerator (17) und einen daran angeschlossenen Impulsdauermodulator (19) enthält und an den Steueranschluß des Leistungsschalter leitend steuernden Einschaltimpulsen abgibt und mit einem Komparator (21), dessen einer Eingang ein zur Ausgangsspannung proportionales Signal enthält und dessen anderer Eingang über eine Rampenspannungsquelle an den Strommeßwiderstand (4) angeschlossen ist,
und die Rampenspannungsquelle einen Hilfstransistor (27) enthält, in dessen Emitterzuleitung eine den Strommeßwiderstand (4) und einen zum Strommeßwiderstand (4) in Serie angeordneten weiteren Widerstand (34) angeordnet ist, und die Basis des Hilfstransistors (27) an einen Kondensator (32) angeschlossen ist, wobei der Ausgang des Komparators an den Impulsdauermodulator (19) angeschlossen ist
**dadurch gekennzeichnet**,
daß an den Kondensator (32) wenigstens ein an eine Gleichspannungsquelle ($U_H$) geführter Ladestrompfad und ein einen elektronischen Schalter (Transistor 28) enthaltender Entladestromzweig (26, 28) angeschlossen ist und daß der elektronische Schalter (Transistor 28) des Entladestromzweiges (26, 28) durch die Steuerschaltung (20) derart steuerbar ist, daß er während der Dauer der Einschaltimpulse gesperrt und wenigstens während eines vorgegebenen Teiles der Einschaltimpulspausen leitend gesteuert ist und daß der andere Eingang des Komparators (21) an den weiteren Widerstand (34) angeschlossen ist.

2. Schaltregler nach Anspruch 1,
**dadurch gekennzeichnet,**
daß zwischen dem in Serie zum Strommeßwiderstand (4) angeordneten Widerstand (34) und dem Emitter des Hilfstran-sistors (27) ein zusätzlicher Widerstand (30) angeordnet ist, und daß der Wert des zusätzlichen Widerstandes (30) größer ist als der Wert des weiteren Widerstandes (4).

3. Schaltregler nach Anspruch 2,
**dadurch gekennzeichnet,**
daß zwischen dem Verbindungspunkt vom weiteren Widerstand (34) und zusätzlichem Widerstand (30) einerseits und Bezugspotential andererseits ein Kondensator (33) angeordnet ist.

4. Schaltregler nach einem der Ansprüche 1 bis 3,
**dadurch gekennzeichnet,**
daß ein Ladestromzweig (Widerstand 25) an eine feste Gleichspannung ($U_H$) und ein weiterer Ladestromzweig (Widerstand 24) an eine Spannungsquelle (1) die Eingangsgleichspannung (U1) gelegt ist.

5. Schaltregler nach Anspruch 4,
**dadurch gekennzeichnet,**
daß der mit seiner Emitter-Kollektorstrecke im Entladestromzweig liegende Transistor (28) emitterseitig an Bezugspotential liegt, kollektorseitig über einen Widerstand (24) an die Eingangsspannung (U1) und über den Entladewiderstand (26) an den mit der Basis des Hilfstransistors (27) verbundenen Anschluß des Kondensators (32) und über einen weiteren Widerstand (25) an die feste Gleichspannung ($U_H$) geführt ist und basisseitig an einem Synchronisierausgang der Steuerschaltung (20) angeschlossen ist und daß parallel zu dem zwischen Kollektor des im Entladestromzweig (26, 28) liegenden Transistors (28) und der Basis des Hilfstransistors (27) liegenden Widerstand (26) eine für den Entladestrom in Durchlaßrichtung gepolte Diode (29) liegt.

6. Schaltregler nach einem der Ansprüche 1 bis 5,
**dadurch gekennzeichnet,**
daß die Basis des im Entladestromzweig (26, 28) liegenden Transistors (28) an einem Synchronisierausgang der Steuerschaltung (20) angeschlossen ist.

7. Schaltregler nach einem der vorhergehenden Ansprüche,
**dadurch gekennzeichnet**,
daß der Schaltregler mit einer Vorrichtung zur Regelung wenigstens einer Ausgangsspannung (U2) durch unterlagerte Stromregelung gebildet ist, bei der als Sollwert der Stromregelung der Istwert der Ausgangsspannung dient.

8. Schaltregler nach Anspruch 7,
**dadurch gekennzeichnet,**
daß er mit einem Spannungsvergleicher versehen ist, der einen Spannungs-Istwert mit einem Sollwert vergleicht, und daß ein Eingang des Komparators (21) an den Ausgang des Spannungsvergleichers (22) und der andere Eingang des Komparators (21) an den Strommeßwiderstand (4) angeschlossen ist.

9. Schaltregler nach einem der vorhergehenden Ansprüche,
**dadurch gekennzeichnet,**
daß die stromabhängiger Induktivität (9) eine Drossel ist.

**Claims**

1. Switching regulator having a power switch (transistor 3) arranged in a main circuit on the primary side in series with a current measuring resistor (4), having a current-dependent inductance arranged in the output circuit, having a control circuit (20) which contains a pulse generator (17) and a pulse duration modulator (19) connected thereto and emits turn-on pulses to the control terminal of the power switch to switch it on, and having a comparator (21) whose one input contains a signal proportional to the output voltage and whose other input is connected to the current measuring resistor (4) via a ramp voltage source, and the ramp voltage source contains an auxiliary transistor (27) in whose emitter supply line there are arranged a [lacuna] the current measuring resistor (4) and a further resistor (34) in series with the current measuring resistor (4), and the base of the auxiliary transistor (27) is connected to a capacitor (32), the output of the comparator being connected to the pulse duration modulator (19), characterized in that there are connected to the capacitor (32) at least one charging current path leading to a DC voltage source (U$_H$) and a discharge current branch (26, 28) containing an electronic switch (transistor 28), and in that the electronic switch (transistor 28) of the discharge current branch (26, 28) can be controlled by the control circuit (20) in such a way that it is switched off for the duration of the turn-on pulses and is switched on at least during a predetermined part of the turn-on pulse pauses, and in that the other input of the comparator (21) is connected to the further resistor (34).

2. Switching regulator according to Claim 1, characterized in that an additional resistor (30) is arranged between the resistor (34), arranged in series with the current measuring resistor (4), and the emitter of the auxiliary transistor (27), and in that the value of the additional resistor (30) is greater than the value of the further resistor (34).

3. Switching regulator according to Claim 2, characterized in that a capacitor (33) is arranged between the connecting point of the further resistor (34) and additional resistor (30), on the one hand, and reference potential, on the other hand.

4. Switching regulator according to one of Claims 1 to 3, characterized in that one charging current branch (resistor 25) is connected to a fixed DC voltage (U$_H$) and another charging current branch (resistor 24) is connected to a voltage source (1) [lacuna] the input DC voltage (U1).

5. Switching regulator according to Claim 4, characterized in that the transistor (28) located with its emitter-collector path in the discharge current branch is connected on its emitter side to reference potential, is led, on its collector side, via a resistor (24) to the input voltage (U1) and via the discharge resistor (26) to that terminal of the capacitor (32) which is connected to the base of the auxiliary transistor (27), and via a further resistor (25) to the fixed DC voltage (U$_H$), and is connected, on its base side, to a synchronization output of the control circuit (20), and in that a diode (29), which is polarized in the forward direction for the discharge current, is located in parallel with the resistor (26), located between the collector of the transistor (28) located in the discharge current branch (26, 28), and the base of the auxiliary transistor (27).

6. Switching regulator according to one of Claims 1 to 5, characterized in that the base of the transistor (28) located in the discharge current branch (26, 28) is connected to a synchronization output of the control circuit (20).

7. Switching regulator according to one of the preceding claims, characterized in that the switching regulator is formed by a device for regulating at least one output voltage (U2) by means of subordinated current regulation, in which the actual value of the output voltage is used as the desired value of the current regulation.

8. Switching regulator according to Claim 7, characterized in that it is provided with a voltage comparator which compares a voltage actual value with a desired value, and in that one input of the comparator (21) is connected to the output of the voltage comparator (22) and the other input of the comparator (21) is connected to the current measuring resistor (4).

9. Switching regulator according to one of the preceding claims, characterized in that the current-dependent inductance (9) is a choke.

**Revendications**

1. Régulateur à découpage comportant un interrupteur de puissance (transistor 3) disposé dans un circuit de courant principal du côté primaire en série avec une résistance (4) de courant de mesure, une inductance dépendant du courant et disposée dans le circuit de sortie et un circuit (20) de commande, qui comprend un générateur (17) d'impulsion et un modulateur (19) de durée d'impulsion connecté au générateur (17) d'impulsion, qui fournit à la borne de commande de l'interrupteur de puissance des impulsions de branchement commandant la conduction, et un comparateur (21), dont une entrée a un signal proportionnel à la tension de sortie et dont l'autre entrée est connectée par l'intermédiaire d'une source de tension en rampe à la résistance (4) de mesure de courant,
la source de tension en rampe comprenant un transistor auxiliaire (27), dans la ligne d'alimentation d'émetteur duquel sont disposées la résistance (4) de mesure de courant et une autre résistance (34) disposée en série avec la résistance (4) de mesure de courant et la base du transistor auxiliaire (27) étant connectée à un condensateur (32), la sortie du comparateur étant connectée au modulateur (19) de durée d'impulsion,

caractérisé en ce que

il est connecté au condensateur (32) au moins une voie de courant de charge reliée à une source ($U_H$) de tension continue et une branche (26, 28) de courant de décharge comprenant un interrupteur électronique (transistor 28) et l'interrupteur électronique (transistor 28) de la branche (26, 28) de courant de décharge peut être commandé par le circuit (20) de commande, de telle sorte qu'il soit bloqué pendant la durée des impulsions de branchement et qu'il soit commandé à l'état conducteur au moins pendant une partie prescrite des poses entre impulsions de branchement, et l'autre entrée du comparateur (21) est connectée à l'autre résistance (34).

2. Régulateur à découpage suivant la revendication 1, caractérisé en ce que

une résistance supplémentaire (30) est disposée entre la résistance (34) disposée en série avec la résistance (4) de mesure de courant et l'émetteur du transistor (27) auxiliaire et la valeur de la résistance supplémentaire (30) est plus grande que la valeur de l'autre résistance (4).

3. Régulateur à découpage suivant la revendication 2, caractérisé en ce que

un condensateur (33) est disposé entre le point de liaison de l'autre résistance (34) et de la résistance supplémentaire (30) d'une part et le potentiel de référence d'autre part.

4. Régulateur à découpage suivant l'une des revendications 1 à 3, caractérisé en ce que

une branche de courant de charge (résistance 25) est portée à une tension continue fixe ($U_H$) et une autre branche de courant de charge (résistance 24) est reliée à une source (1) de tension, la tension U1 continue d'entrée.

5. Régulateur à découpage suivant la revendication 4, caractérisé en ce que

le transistor (28), dont la section émetteur-collecteur se trouve dans la branche de courant de décharge, est porté côté émetteur au potentiel de référence, est porté, côté collecteur, par l'intermédiaire d'une résistance (24), à la tension (U1) d'entrée, est relié, côté collecteur, par l'intermédiaire de la résistance (26) de décharge, à la borne du condensateur (32), qui est reliée à la base du transistor auxiliaire (27), est relié, côté collecteur, par l'intermédiaire d'une autre résistance (25), à la tension continue fixe ($U_H$) et est connecté, côté base, à une sortie de synchronisation du circuit (20) de commande et une diode (29) de polarité telle qu'elle laisse passer le courant de décharge se trouve en parallèle avec la résistance disposée entre le collecteur du transistor (28) présent dans la branche (26, 28) de courant de décharge et la base du transistor (27) auxiliaire.

6. Régulateur à découpage suivant l'une des revendications 1 à 5, caractérisé en ce que

la base du transistor (28) se trouvant dans la branche (26, 28) de courant de décharge est connectée à une sortie de synchronisation du circuit (20) de commande.

7. Régulateur à découpage suivant l'une des revendications précédentes, caractérisé en ce que

le régulateur de commutation est formé d'un dispositif de régulation d'au moins une tension (U2) de sortie par régulation de courant en cascade, la valeur réelle de la tension de sortie servant de valeur de consigne de la régulation de courant.

8. Régulateur à découpage suivant la revendication 7, caractérisé en ce que

il est muni d'un comparateur de tension, qui compare une valeur réelle de tension à une valeur de consigne, une entrée du comparateur (21) est connectée à la sortie de comparateur (22) de tension et l'autre entrée du comparateur (21) est connectée à la résistance (4) de mesure de courant.

9. Régulateur à découpage suivant l'une des revendications précédentes, caractérisé en ce que l'inductance (9) dépendant du courant est une bobine de réactance.

FIG 1

EP 0 581 989 B1

FIG 2

FIG 3

FIG 4